# EUROPÄISCHE PATENTSCHRIFT

(11) **EP 1 151 894 B1**
(45) Veröffentlichungstag und Bekanntmachung des Hinweises auf die Patenterteilung: **28.01.2004**
(21) Anmeldenummer: 01108074.4
(22) Anmeldetag: 29.03.2001
(51) Int. Cl.: B60R 1/06

(54) **Rückspiegelanordnung, insbesondere als Aussenspiegel für Nutzfahrzeuge**
Rear view mirror, especially an exterior mirror for lorries
Rétroviseur, en particulier rétroviseur extérieur pour véhicules utilitaires

(30) Priorität: 04.05.2000 DE 10021743
(43) Veröffentlichungstag der Anmeldung: 07.11.2001
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Centmeyer, Stefan, 91465 Ergersheim (DE)
(74) Vertreter: Winter, Brandl, Fürniss, Hübner, Röss, Kaiser, Polte Partnerschaft

(56) Entgegenhaltungen:
- WO-A-00/46072
- DE-A- 2 537 876
- DE-A- 2 703 105
- DE-A- 2 820 883
- DE-A- 19 530 913
- DE-A- 19 840 004
- DE-C- 2 660 184
- FR-A- 2 633 568

## Beschreibung

Die Erfindung betrifft eine Rückblickspiegelanordnung insbesondere als Außenspiegel für Nutzfahrzeuge gemäß dem Oberbegriff des Anspruchs 1.

Derartige Außenspiegel sind in unterschiedlichsten Konstruktionen aus dem Stand der Technik bekannt. In einem Gehäuseteil, das in geeigneter Weise mit der Karosserie des Fahrzeugs verbunden ist, ist eine Spiegelscheibe angeordnet, die mittels eines Schwenkmechanismus zwischen ihr und dem Gehäuseteil relativ zum Gehäuse verstellbar gelagert ist. Das Gehäuseteil selbst ist in der Regel ein Spritzgußteil aus massivem Kunststoff, das meist als Wanne ausgebildet ist, in die weitere Spiegelbestandteile oder entsprechende Anbringungspunkte eingesetzt sind. Insbesondere für große LKW- und Omnibusspiegel werden oftmals als tragendes Element für den Außenspiegel Rohr- oder Plattenkonstruktionen verwendet, die direkt mit dem zur Karosserie führenden Spiegelhalter verbunden sind, wie dies beispielsweise aus der EP-A-0 590 510 bekannt ist. Das Gehäuseteil dient dann nur noch zur Abdeckung der Spiegelscheiben-Rückseite und der Schwenkmechanismen sowie zur aerodynamischen Verkleidung des Außenspiegels. Derartige Konstruktionen sind äußerst aufwendig und schwergewichtig.

Ein Problem dieser Rohr- und Plattenkonstruktionen besteht darin, daß vergleichsweise starke Vibrationen während des Betriebs des Fahrzeuges auftreten. Um diese starken Vibrtionen zu reduzieren, ist es aus der EP 0 865 967 A2 bekannt eine tragende Rohrstruktur mit einem geschäumten Formteil zu umgeben. Nachteilig hierbei ist es, dass die Gesamtkonstruktion vergleichsweise schwer ist.

Eine sehr leichte Konstruktion, die sich für kleiner Spiegel eignet, ist aus der DE 44 29 604 A1 bekannt. Hierbei wurde die Rohrkonstruktion völlig weggelassen und das Schaumteil selbst ist als tragende Struktur ausgebildet. Hierzu wird insbesondere Gradientenschaum einstückig oder aus mehreren Teilen zusammengesetzt verwendet.

Ausgehend von der gattungsgemässen EP 0 865 967 A2 ist es daher Aufgabe der vorliegenden Erfindung, eine ausreichend stabile Rückblickspiegelanordnung anzugeben, die dennoch eine möglichst geringe Vibrationsanfälligkeit zeigt.

Die Lösung dieser Aufgabe erfolgt durch die Merkmale des Anspruchs 1.

Dadurch, daß der Träger aus einem Schaumteil besteht, insbesondere aus Gradientenschaum, in dem eine verästelte Versteifungsstruktur eingebettet ist, wird zum einen eine hervorragende Stabilität und zum anderen eine geringe Vibrationsanfälligkeit erreicht. Darüber hinaus ist eine solche Struktur leichter als die herkömmlichen Strukturen mit Trägern aus Rohren oder Platten. Die verästelte Versteifungsstruktur wäre allein als Träger ungeeignet. Erst im Zusammenwirken mit dem Schaumteil, in dem die verästelte Versteifungsstruktur eingebettet ist, wird die notwendige Stabilität erreicht. Durch die Verästelungen besitzt die Versteifungsstruktur eine große Oberfläche an der das Schaumteil angreifen kann. Hierdurch wird ein Träger bereitgestellt, der eine stabile Verbundstruktur aus Versteifungsstruktur und umgebendes Schäumteil ist.

Bei der bevorzugten Verwendung von Gradientenschaum führt dies zur großflächigen Ausbildung von festeren Hautschichten an der Oberfläche des Gradientenschaums. Hierdurch werden sozusagen drei Bereiche unterschiedlicher Steifigkeit nahezu kontinuierlich miteinander verbunden, nämlich die harte Versteifungsstruktur selbst, die unmittelbar an die Verästelungen der Versteifungsstruktur angreifende fester Haut des Gradientenschaums der eigentliche Schaumbereich der von der Haut umgeben ist.

Vorzugsweise ist die verästelte Versteifungsstruktur vollständig in dem Gradientenschaum eingeschäumt ist, d.h. das Schaumteil ist einstückig ausgebildet. Hierdurch wird eine besonders hohe Stabilität und eine besonders dauerhafte Verbindung zwischen Schaumteil und verästelter Versteifungsstruktur erreicht.

Bei komplizierteren Strukturen kann es hilfreich sein, die verästelte Versteifungsstruktur in zwei Halbschalen aus Schaum, insbesondere Gradientenschaum, oder mehreren Teilschalen einzubetten.

Vorzugsweise besteht die verästelte Versteifungsstruktur aus einer Fachwerkstruktur, die aus Profilschinen zusammengesetzt ist. Alternativ ist auch eine Wabenstruktur als Trägerstruktur möglich. Ebenso ist es möglich, eine Lochblechstruktur als verästelte Trägerstruktur zu verwenden. Der wesentliche Punkt dieser Versteifungsstrukturen besteht darin, daß eine große äußere oder auch innere Oberfläche besteht, an der das Schaumteil eingreifen und angreifen kann, wodurch der nötige Halt und die nötige Stabilität erreicht wird. Dies Ziel wird auch dadurch erreicht, daß die Oberfläche der Versteifungsstruktur zusätzlich aufgerauht ist und/oder Vorsprünge aufweist.

Gemäß einer vorteilhaften Ausgestaltung der Erfindung umfaßt der Träger wannenförmige Ausnehmungen in den der bzw. die Spiegel und ggfs. zugehörige Verschwenkmechanismen eingebettet sind. Zusätzlich sind an dem Träger und insbesondere an der Versteifungsstruktur Befestigungspunkte für die verschiedenen Spiegel vorgesehen.

Gemäß einer weiteren vorteilhaften Ausgestaltung ist in das Schaumteil bereits ein Beschlagteil eingeschäumt, mittels dem die Rückblickspiegelanordnung an dem Fahrzeug befestigbar ist. Dieses Beschlagteil ist wiederum in vorteilhafterweise unmittelbar mechanisch mit der Versteifungsstruktur verbunden.

Gemäß einer weiteren bevorzugten Ausführungsform umfaßt das Beschlagteil auch das Gelenk zum Wegklappen des Außenspiegels bzw. zum Verstellen des Spiegels. Alternativ kann der Träger auch zweigeteilt sein, wobei seine beiden Teile über ein Gelenk miteinander verbunden sind. Beide Teile des Trägers sind dann aus einer verästelten Versteifungsstruktur und umgebenden Schaumteil aufgebaut.

Die übrigen Unteransprüche beziehen sich auf weitere vorteilhafte Ausgestaltungen der Erfindung.

Weitere Einzelheiten, Merkmale und Vorteile der Erfindung zeigt die nachfolgende Beschreibung bevorzugter Ausführungsformen anhand der Zeichnungen.

Es zeigt:
Fig. 1 eine schematische Darstellung einer ersten Ausführungsform der Erfindung,
Fig. 2 eine Detaildarstellung der Versteifungsstruktur der Ausführungsform nach Fig. 1,
Fig. 3 eine Ansicht der Versteifungsstruktur mit daran montierten Spiegeln und Beschlagteil von oben,
Fig. 4 eine Schnittdarstellung des Beschlagteils der ersten Ausführungsform,
Fig. 5 eine zweite Ausführungsform der Erfindung mit Gelenk, Beschlagteil und mit an die Versteifungsstruktur montierten Spiegel,
Fig. 6 die zweite Ausführungsform nach Fig. 5 von oben betrachtet,
Fig. 7 das Beschlagteil der zweiten Ausführungsform,
Fig. 8 eine dritte Ausführungsform der Erfindung mit einer Wabenstruktur als verästelte Versteifungsstruktur, und
Fig. 9 die Wabenstruktur aus Fig. 8 eingebettet zwischen zwei Halbschalen aus Gradientenschaum.

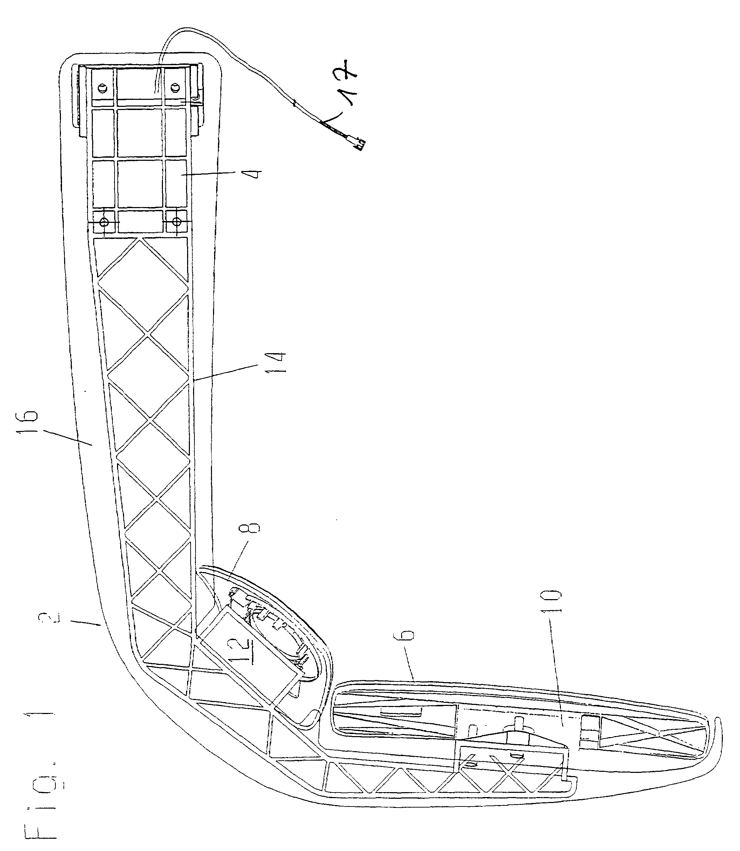

Fig. 1 zeigt schematisch eine erste Ausführungsform der Erfindung. Die Rückblickspiegelanordnung umfaßt einen Träger 2, der fahrzeugseitig mit einem Beschlagteil 4 verbunden ist. An dem von dem Fahrzeug abgewandten Ende des Trägers 2 ist ein erster Spiegel 6 und ein zweiter Spiegel 8 montiert. Beide Spiegel 6 und 8 umfassen einen Verstellmechanismus 10 bzw. 12 mittels dem sie an den Träger 2 montiert sind. Der Träger 2 umfaßt eine verästelte Versteifungsstruktur in Form einer Fachwerkstruktur 14, die in ein geschäumtes Teil 16 aus Gradientenschaum eingebettet ist. Das Bezugszeichen 17 bezeichnet die elektrischen Anslüsse, die in den Gradientenschaum 16 eingeschäumt sind. Alternativ lassen sich in dem Gradientenschaum 16 und der Fachwerkstruktur 14 nicht näher dargestellte Leerrohre vorsehen in denen die elektrischen Anschlüsse 17 verlegt werden.

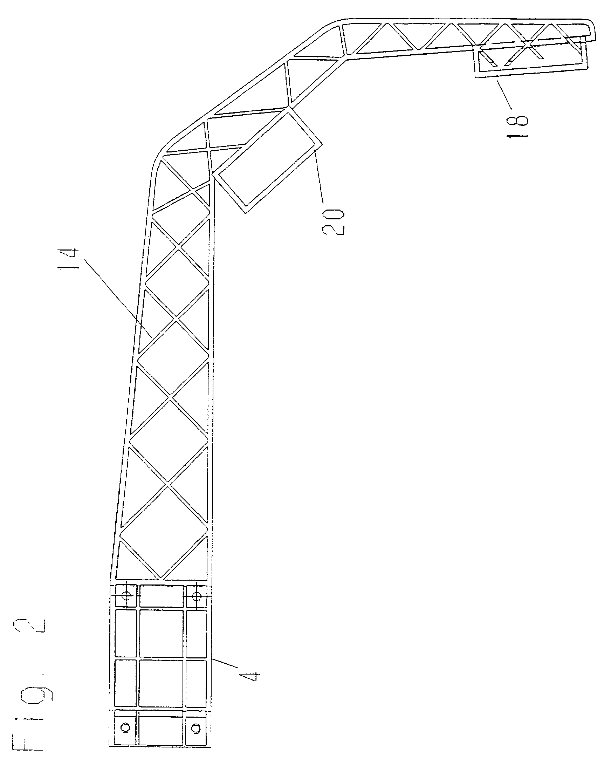

Fig. 2 zeigt eine Detaildarstellung der Fachwerkstruktur 14 mit einer ersten und einer zweiten Halterung 18 und 20 für den ersten und zweiten Spiegel 6 und 8. Wie aus Fig. 2 zu ersehen ist, ist das Beschlagteil 4 mechanisch fest mit der Versteifungsstruktur bzw. der Fachwerkstruktur 14 verbunden, genauer verschraubt. Die gesamte Anordnung nach Fig. 2 bestehend aus Fachwerkstruktur 14 und Beschlagteil 4 ist eingeschäumt bzw. von dem Gradientenschaum 16 umgeben und bildet somit den erfindungsgemäßen Verbundträger 2.

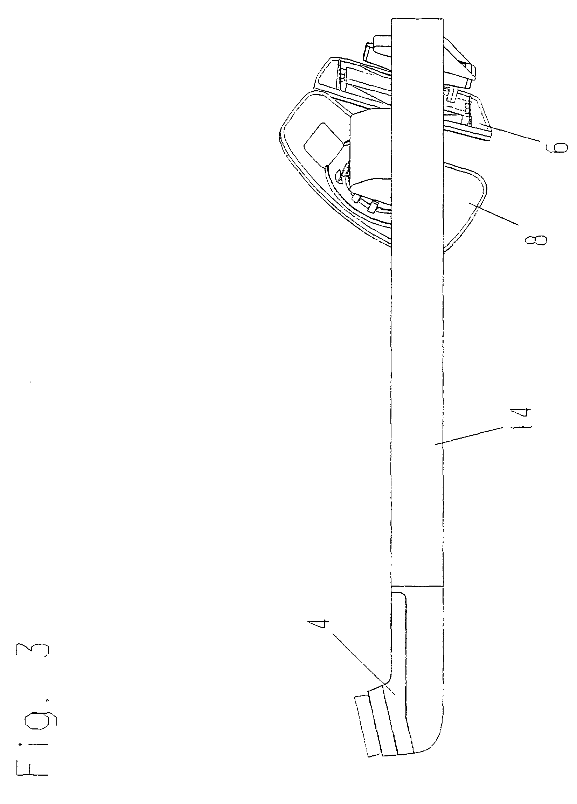

Fig. 3 zeigt eine Darstellung der ersten Ausführungsform der Erfindung von oben ohne geschäumtes Teil 16. Aus Fig. 2 ist zu ersehen, dass das Beschlagteil 4 mit der Fachwerkstruktur 14 verschraubt ist.

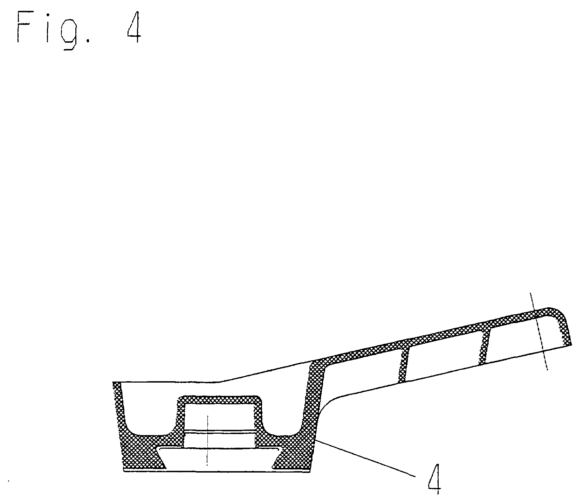

Fig. 4 zeigt eine Schnittdarstellung des Beschlagteils 4 aus der zu ersehen ist, daß das Beschlagteil 4 eine ähnliche Struktur aufweist, wie die Fachwerkstruktur 14, so daß es sich fest mit dem Gradientenschaum 16 bzw. mit dem geschäumten Teil 16 verbindet.

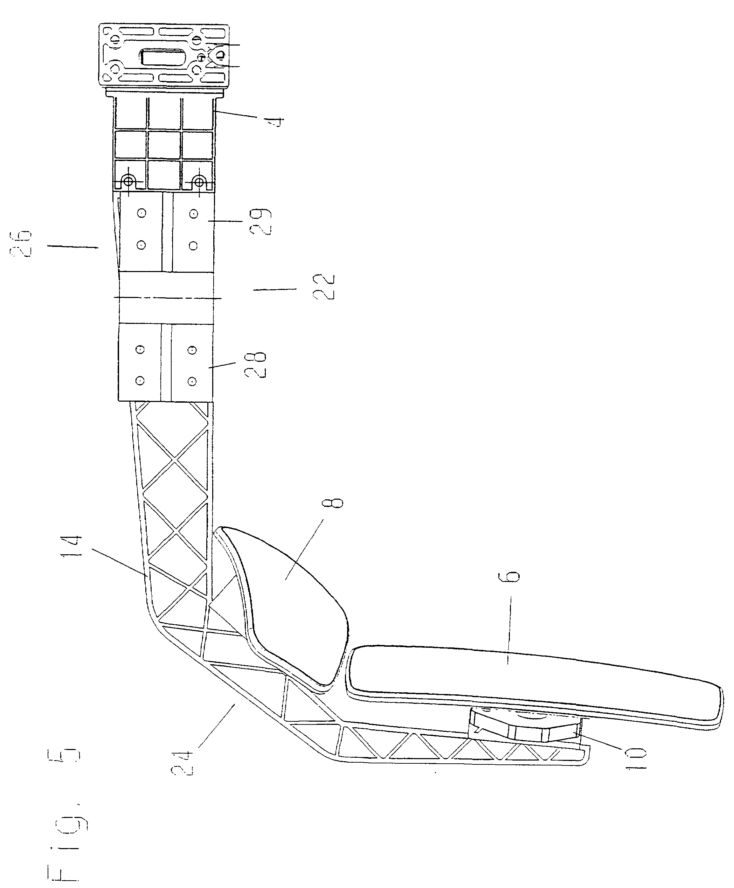

Die Fig. 5 bis 7 zeigen eine zweite Ausführungsform der Erfindung, die sich von der Ausführungsform nach den Fig. 1 bis 4 dadurch unterscheidet, daß in den Träger 2 ein Gelenk 22 integriert ist, mittels dem sich die Spiegelanordnung verstellen bzw. wegklappen läßt. D. h. der Träger 2 umfaßt einen ersten Trägerarm 24 und einen zweiten Trägerarm 26, die über das Gelenk 22 verbunden sind. Die Fachwerkstruktur 14 des ersten Trägerarms 24 ist mit einem ersten Gelenkteil 28 fest verschraubt, das zusammen mit einem zweiten Gelenkteil 29 das Gelenk 22 bildet. An dem zweiten Gelenkteil 26 ist das Beschlagteil 4 angeschraubt, mittels dem die gesamte Rückblickspiegelanordnung an dem Fahrzeug befestigbar ist. Das zweite Gelenkteil 29 und das Beschlagteil 4 bilden bei der zweiten Ausführungsform den zweiten Trägerarm 26. Alternativ kann der zweite Trägerarm 26 ebenfalls eine Fachwerkstruktur 14 aufweisen, die zwischen zweiten Gelenkteil 29 und Beschlagteil 4 angeordnet ist.

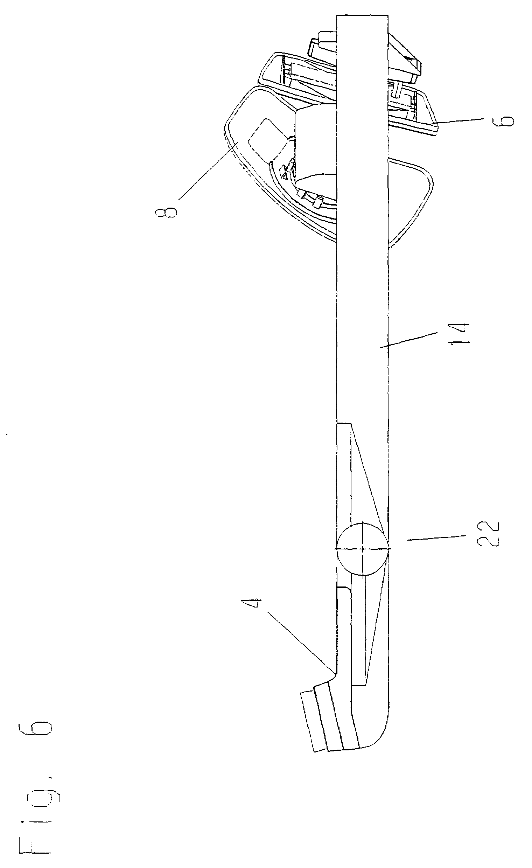

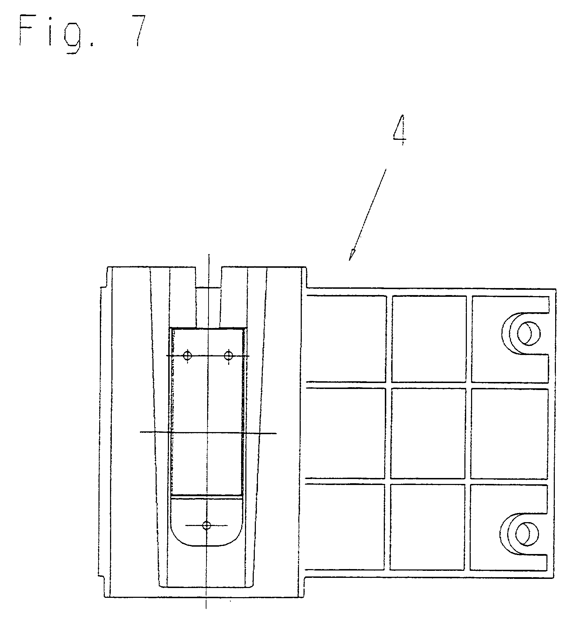

Fig. 5 zeigt die Spiegelanordnung ohne Umschäumung. Fig. 6 zeigt die Anordnung von Fig. 5 von oben. Fig. 7 zeigt das Beschlagteil 4 in Detaildarstellung.

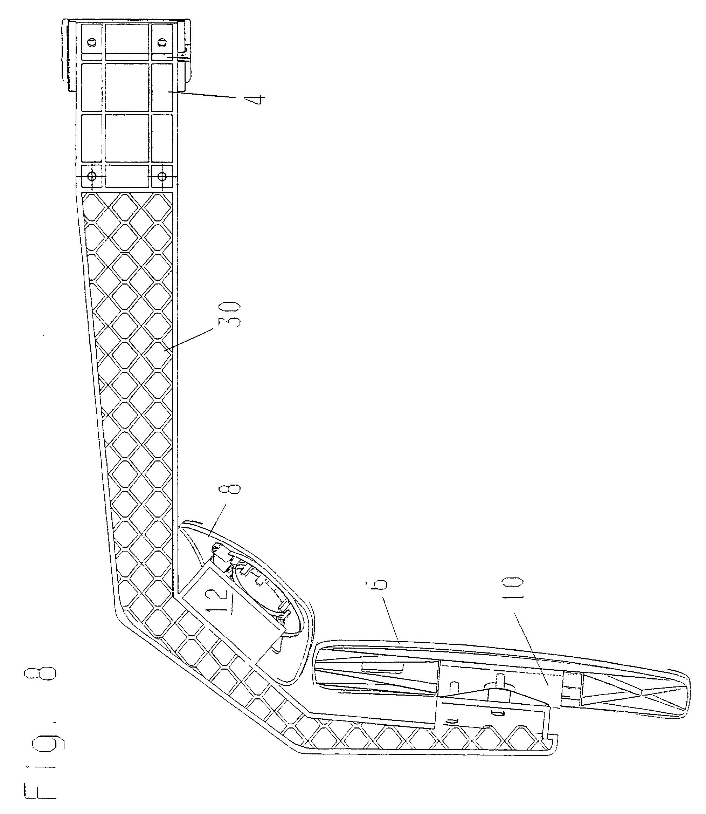

Fig. 8 zeigt eine Wabenstruktur 30, die an Stelle der Fachwerkstruktur 14 als verästelte Trägerstruktur verwendet werden kann.

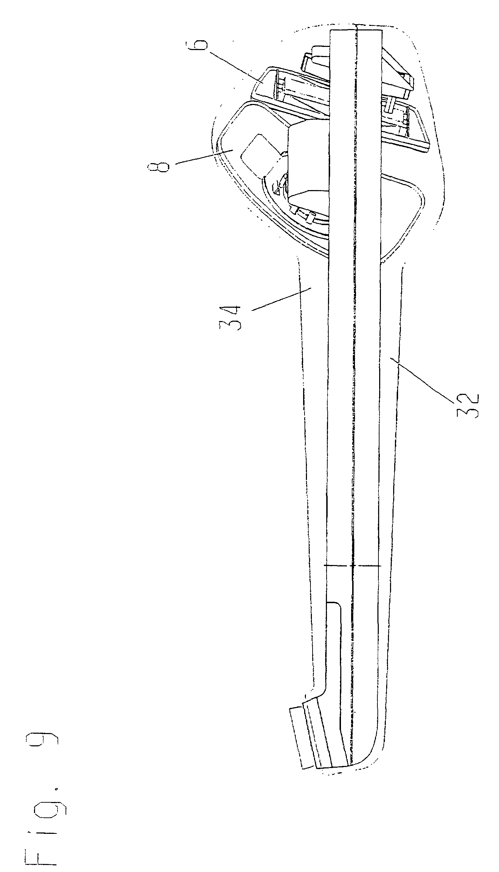

Fig. 9 zeigt schließlich schematisch wie die Wabenstruktur 30 in ein geschäumtes Teil bestehend aus zwei Halbschalen 32 und 34 eingebettet ist.

### Bezugszeichenliste

- 2: Träger
- 4: Beschlagteil
- 6: erster Spiegel
- 8: zweiter Spiegel
- 10: Verstellmechanismus erster Spiegel
- 12: Verstellmechanismus zweiter Spiegel
- 14: Fachwerkstruktur
- 16: geschäumtes Teil
- 17: elektrische Anschlüsse
- 18: Halterung erster Spiegel
- 20: Halterung zweiter Spiegel
- 22: Gelenk
- 24: erster Trägerarm
- 26: zweiter Trägerarm
- 28: erstes Gelenkteil
- 29: zweites Gelenkteil
- 30: Wabenstruktur
- 32: erste Halbschale aus Hartschaum
- 34: zweite Halbschale aus Hartschaum

## Patentansprüche

1. Rückblickspiegelanordnung, insbesondere als Außenspiegel, für Nutzfahrzeuge mit
einem an einem Fahrzeug anbringbaren Träger (2), und wenigstens einem an dem Träger (2) befestigten oder in den Träger (2) integrierten, vorzugsweise verstellbaren, Spiegel (6, 8),
**dadurch gekennzeichnet,**
**dass** der Träger (2) ein geschäumtes Teil (16; 32, 34) umfaßt, in dem eine verästelte Versteifungsstruktur (14; 30) eingebettet ist.

2. Rückblickspiegelanordnung nach Anspruch 1, **dadurch gekennzeichnet, dass** die Versteifungsstruktur (14; 30) in Gradientenschaum (16) eingeschäumt ist.

3. Rückblickspiegelanordnung nach Anspruch 1 oder 2, **dadurch gekennzeichnet, dass** die Versteifungsstruktur (14; 30) in wenigstens zwei Teilschalen aus Gradientenschaum (32, 34) eingebettet ist.

4. Rückblickspiegelanordnung nach einem der vorhergehenden Ansprüche, **dadurch gekennzeichnet, daß** die Versteifungsstruktur eine Fachwerkstruktur (14) ist.

5. Rückblickspiegelanordnung nach einem der Ansprüche 1 bis 4, **dadurch gekennzeichnet, daß** die Versteifungsstruktur eine Wabenstruktur (30) ist.

6. Rückblickspiegelanordnung nach einem der vorhergehenden Ansprüche, **dadurch gekennzeichnet, daß** die Versteifungsstruktur (14; 30) aus Profilschienen zusammengesetzt ist.

7. Rückblickspiegelanordnung nach einem der vorhergehenden Ansprüche 1 bis 5, **dadurch gekennzeichnet, daß** die Versteifungsstrukur (16, 30) aus Lochblech besteht.

8. Rückblickspiegelanordnung nach einem der vorhergehenden Ansprüche, **dadurch gekennzeichnet, daß** die Versteifungsstruktur (14; 30) eine aufgerauhte Oberfläche aufweist und/oder mit Vorsprüngen versehen ist.

9. Rückblickspiegelanordnung nach einem der vorhergehenden Ansprüche, **dadurch gekennzeichnet, daß** der Gradientenschaum (16) ein 2-Komponenten-Hartschaum ist.

10. Rückblickspiegelanordnung nach einem der vorhergehenden Ansprüche, **dadurch gekennzeichnet, daß** der Träger (2) wenigstens eine wannenförmige Ausnehmung zur Aufnahme des wenigstens einen Spiegels (6, 8) umfaßt.

11. Rückblickspiegelanordnung nach einem der vorhergehenden Ansprüche, **dadurch gekennzeichnet, daß** der wenigstens eine Spiegel (6, 8) an der Versteifungsstruktur (14, 30) befestigt ist.

12. Rückblickspiegelanordnung nach einem der vorhergehenden Ansprüche, **dadurch gekennzeichnet, daß** in den Träger (2, 26) ein Beschlagteil (4) zur Montage der Rückblickspiegelanordnung an einem Fahrzeug eingeschäumt ist.

13. Rückblickspiegelanordnung nach Anspruch 12, **dadurch gekennzeichnet, daß** das Beschlagteil (4) an der Versteifungsstruktur (14; 30) befestigt ist.

14. Rückblickspiegelanordnung nach Anspruch 12 oder 13, **dadurch gekennzeichnet, daß** das zwischen Beschlagteil (4) und Träger (2) ein Gelenk (22), insbesondere mit elektrischem Antrieb, zum Verstellen und/oder zum Wegklappen der Rückblickspiegelanordnung vorgesehen ist.

15. Rückblickspiegelanordnung nach einem der vorhergehenden Ansprüche, **dadurch gekennzeichnet, daß** in den Träger (2) Kabel (17) und/oder Leerrohre für die Stromversorgung und/oder sonstige elektrische und/oder elektronische Komponenten integriert sind.

16. Rückblickspiegelanordnung nach einem der vorhergehenden Ansprüche, **dadurch gekennzeichnet, daß** der Träger (2) einen ersten und einen zweiten Trägerarm (24, 26) mit eingeschäumter Versteifungsstruktur (14; 30) umfaßt, die über ein Gelenk (22) miteinander verbunden sind.

17. Rückblickspiegelanordnung nach Anspruch 16, **dadurch gekennzeichnet, daß** das Gelenk (22) in den ersten und in den zweiten Trägerarm (24, 26) eingeschäumt ist.

18. Rückblickspiegelanordnung nach Anspruch 16 oder 17, **dadurch gekennzeichnet, daß** das Gelenk (22) an der Versteifungsstruktur (14; 30) des ersten und zweiten Trägerarms (24, 26) befestigt ist.

## Claims

1. A rearview mirror arrangement, in particular as an outside mirror for commercial vehicles, with
a carrier (2) capable of being secured on a vehicle, and at least one, preferably adjustable mirror (6, 8) affixed to the carrier (2) or integrated into the carrier (2),
**characterized in that**
the carrier (2) comprises a foamed component (16; 32, 23), within which a branched stiffening structure (14; 30) is embedded.

2. A rearview mirror arrangement in accordance with claim 1, **characterized in that** the stiffening structure (14; 30) is embedded in gradient foam (16).

3. A rearview mirror arrangement in accordance with claim 1 or 2, **characterized in that** the stiffening structure (14; 30) is embedded in at least two shell parts of gradient foam (32, 34).

4. A rearview mirror arrangement in accordance with any one of the preceding claims, **characterized in that** the stiffening structure is a compartmentalized structure.

5. A rearview mirror arrangement in accordance with any one of claims 1 to 4, **characterized in that** the stiffening structure is a honeycomb structure (30).

6. A rearview mirror arrangement in accordance with any one of the preceding claims, **characterized in that** the stiffening structure (14; 30) is composed of sectional members.

7. A rearview mirror arrangement in accordance with any one of the preceding claims 1 to 5, **characterized in that** the stiffening structure (16, 30) comprises perforated metal.

8. A rearview mirror arrangement in accordance with any one of the preceding claims, **characterized in that** the stiffening structure (14; 30) has a roughed surface and/or is provided with protrusions.

9. A rearview mirror arrangement in accordance with any one of the preceding claims, **characterized in that** the gradient foam (16) is a 2-component rigid foam.

10. A rearview mirror arrangement in accordance with any one of the preceding claims, **characterized in that** the carrier (2) includes at least one basin-type recess for receiving the at least one mirror (6, 8).

11. A rearview mirror arrangement in accordance with any one of the preceding claims, **characterized in that** the at least one mirror (6, 8) is affixed to the stiffening structure (14, 30).

12. A rearview mirror arrangement in accordance with any one of the preceding claims, therein **characterized, in that** a fitting (4) for mounting the rearview mirror arrangement on a vehicle is embedded in foam in the carrier (2, 26).

13. A rearview mirror arrangement in accordance with claim 12, **characterized in that** the fitting (4) is affixed to the stiffening structure (14; 30).

14. A rearview mirror arrangement in accordance with claim 12 or 13, **characterized in that** between the fitting (4) and the carrier (2) a pivoting linkage (22) is provided, particularly with an electrical drive, for the adjustment and/or the folding out of the way of the rearview mirror arrangement.

15. A rearview mirror arrangement in accordance with any one of the preceding claims, **characterized in that** cables (17) and/or empty conduits for power supply and/or additional electrical and/or electronic components are integrated in the carrier (2).

16. A rearview mirror arrangement in accordance with any one of the preceding claims, **characterized in that** the carrier (2) possesses first and second carrier arms (24, 26) with a stiffening structure (14; 30) embedded in foam, said carrier arms being connected by means of a pivotable linkage (22).

17. A rearview mirror arrangement in accordance with claim 16, **characterized in that** the pivotable linkage (22) is embedded in foam in the first and second carrier arms (24, 26).

18. A rearview mirror arrangement in accordance with claim 16 or 17, **characterized in that** the pivotable linkage (22) is affixed to the stiffening structure (14; 30) of the first and second carrier arms (24, 26).

## Revendications

1. Agencement de rétroviseur, en particulier formant rétroviseur extérieur pour véhicules utilitaires, avec un élément porteur (2) pouvant être installé sur un véhicule et avec au moins un miroir de préférence réglable (6, 8) fixé à l'élément porteur (2) ou intégré dans l'élément porteur (2), **caractérisé en ce que** l'élément porteur (2) comprend une partie en mousse (16 ; 32, 34) dans laquelle est noyée une structure raidisseuse ramifiée (14 ; 30).

2. Agencement de rétroviseur selon la revendication 1, **caractérisé en ce que** la structure raidisseuse (14 ; 30) est enrobée de mousse à gradient (16).

3. Agencement de rétroviseur selon la revendication 1 ou 2, **caractérisé en ce que** la structure raidisseuse (14 ; 30) est noyée dans au moins deux coques partielles en mousse à gradient (32, 34).

4. Agencement de rétroviseur selon une des revendications précédentes, **caractérisé en ce que** la structure raidisseuse est une structure en treillis (14).

5. Agencement de rétroviseur selon une des revendications 1 à 4, **caractérisé en ce que** la structure raidisseuse est une structure en nid d'abeille (30).

6. Agencement de rétroviseur selon une des revendications précédentes, **caractérisé en ce que** la structure raidisseuse (14 ; 30) est constituée de rails profilés.

7. Agencement de rétroviseur selon une des revendications précédentes 1 à 5, **caractérisé en ce que** la structure raidisseuse (16, 30) est constituée de tôle perforée.

8. Agencement de rétroviseur selon une des revendications précédentes, **caractérisé en ce que** la structure raidisseuse (14 ; 30) présente une surface rugueuse et/ou est pourvue de saillies.

9. Agencement de rétroviseur selon une des revendications précédentes, **caractérisé en ce que** la mousse à gradient (16) est une mousse rigide à 2 composants.

10. Agencement de rétroviseur selon une des revendications précédentes, **caractérisé en ce que** l'élément porteur (2) est pourvu d'au moins un évidement en forme de cuvette pour recevoir le miroir au nombre d.'au moins un (6, 8).

11. Agencement de rétroviseur selon une des revendications précédentes, **caractérisé en ce que** le miroir au nombre d'au moins un (6, 8) est fixé à la structure raidisseuse (14, 30).

12. Agencement de rétroviseur selon une des revendications précédentes, **caractérisé en ce qu'**une ferrure (4) pour le montage de l'agencement de rétroviseur sur un véhicule est noyée dans l'élément porteur (2, 26).

13. Agencement de rétroviseur selon la revendication 12, **caractérisé en ce que** la ferrure (4) est fixée à la structure raidisseuse (14 ; 30).

14. Agencement de rétroviseur selon la revendication 12 ou 13, **caractérisé en ce qu'**une articulation (22), en particulier à entraînement électrique, est prévue entre la ferrure (4) et l'élément porteur (2) pour régler et/ou pour rabattre l'agencement de rétroviseur.

15. Agencement de rétroviseur selon une des revendications précédentes, **caractérisé en ce que** des câbles (17) et/ou des gaines pour l'alimentation en courant, et/ou d'autres composants électriques et/ou électroniques sont intégrés à l'élément porteur (2).

16. Agencement de rétroviseur selon une des revendications précédentes, **caractérisé en ce que** l'élément porteur (2) comprend un premier et un second bras porteur (24, 26) à structure raidisseuse enrobée de mousse (14 ; 30), lesquels sont reliés entre eux par l'intermédiaire d'une articulation (22).

17. Agencement de rétroviseur selon la revendication 16, **caractérisé en ce que** l'articulation (22) dans le premier et le second bras porteur (24, 26) est enrobée de mousse.

18. Agencement de rétroviseur selon la revendication 16 ou 17, **caractérisé en ce que** l'articulation (22) est fixée à la structure raidisseuse (14 ; 30) des premier et second bras porteurs (24, 26).
